# EUROPÄISCHE PATENTANMELDUNG

(11) **EP 2 244 105 A1**
(43) Veröffentlichungstag der Anmeldung: **27.10.2010**
(21) Anmeldenummer: 09005784.5
(22) Anmeldetag: 24.04.2009
(51) Int. Cl.: G01S 17/02, G01S 17/93, G01G 1/16

(54) **Vorrichtung und Verfahren zum Überwachen eines Fahrwegs**

(71) Anmelder: SICK AG, 79183 Waldkirch (DE)
(72) Erfinder: Fürstenberg, Kay, 21029 Hamburg (DE); Brumm, Mario, 21465 Reinbek (DE)
(74) Vertreter: Manitz, Finsterwald & Partner GbR

(57) **Zusammenfassung**

Zum Überwachen eines Fahrwegs für Kraftfahrzeuge wird ein rückwärtiger Umgebungsbereich eines Kraftfahrzeugs mittels einer optischen Erfassungseinrichtung während einer Vorwärtsfahrt des Kraftfahrzeugs auf dem Fahrweg abgetastet. Auf dem Fahrweg befindliche Gegenstände in dem rückwärtigen Umgebungsbereich werden detektiert und ein Signal wird an wenigstens eine von dem Kraftfahrzeug entfernte Empfangeinheit übermittelt, sobald ein Gegenstand in dem rückwärtigen Umgebungsbereich detektiert wird.

## Beschreibung

Die vorliegende Erfindung betrifft ein Verfahren und eine Vorrichtung zum Überwachen eines Fahrwegs für Kraftfahrzeuge, insbesondere einer Transportpiste in einer Bergbauumgebung.

Im Über- oder Untertagebau werden zum Transport von Rohstoffen und Abraum Flotten von Transportfahrzeugen eingesetzt, die sich auf einem festgelegten Fahrweg, wie beispielsweise einer Transportpiste, bewegen. Dabei kommt es immer wieder dazu, dass einzelne Gegenstände wie Gesteinsbrocken von einem Transportfahrzeug herabfallen und auf der Transportpiste liegen bleiben. Der Fahrer eines nachfolgenden Fahrzeugs muss einem derartigen Hindernis ausweichen, um eine Beschädigung des Fahrzeugs und insbesondere der Reifen zu vermeiden. Ein rechtzeitiges Ausweichen oder Bremsen kann sich jedoch als schwierig erweisen, da Transportfahrzeuge im Bergbau oft mit relativ hoher Geschwindigkeit auf der Transportpiste unterwegs sind und zudem in voll beladenem Zustand sehr schwer sind.

Es ist daher wünschenswert, eine Überwachung eines Fahrwegs der genannten Art hinsichtlich herabgefallener Gegenstände vorzusehen. Dies könnte grundsätzlich mit einem optischen Erfassungssystem erfolgen, das vor einem fahrenden Fahrzeug befindliche Gegenstände erkennt und dem Fahrer meldet. Allerdings arbeiten derartige Systeme auf weite Entfernungen oft nicht zuverlässig, wohingegen bei einer Erfassung im Nahbereich wiederum kein rechtzeitiges Ausweichen möglich ist.

Es ist somit eine Aufgabe der Erfindung, eine sichere und zuverlässige Überwachung eines Fahrwegs für Kraftfahrzeuge zu ermöglichen.

Diese Aufgabe wird zum einen durch ein Verfahren mit den Merkmalen des Anspruchs 1 gelöst. Erfindungsgemäß wird ein rückwärtiger Umgebungsbereich eines Kraftfahrzeugs mittels einer optischen Erfassungseinrichtung, insbesondere eines Laserscanners, während einer Vorwärtsfahrt des Kraftfahrzeugs auf dem Fahrweg abgetastet, auf dem Fahrweg befindliche, insbesondere von dem Fahrzeug verlorene, Gegenstände in dem rückwärtigen Umgebungsbereich werden detektiert und ein Signal wird an wenigstens eine von dem Kraftfahrzeug entfernte Empfangseinheit übermittelt, sobald ein Gegenstand in dem rückwärtigen Umgebungsbereich detektiert wird.

Entgegen der naheliegenden Vorgehensweise, den Bereich vor einem Fahrzeug zu überwachen, um den Fahrer eben dieses Fahrzeugs entsprechend zu warnen, wird erfindungsgemäß der Bereich hinter einem fahrenden Fahrzeug überwacht. Es wird also gezielt nach Gegenständen gesucht, die das jeweilige Fahrzeug selbst verloren hat, um Informationen darüber an andere Fahrzeuge weiterzuleiten. Die Fahrer der anderen Fahrzeuge sind dann gewarnt und können in geeigneter Weise reagieren. Alternativ oder zusätzlich können Reinigungsfahrzeuge oder Personal zur Beseitigung der Gegenstände informiert werden. Von besonderem Vorteil ist dabei die Tatsache, dass für einen etwaigen Ausweich- oder Bremsvorgang ausreichend Zeit bleibt, da die Fahrzeuge auf einer Transportpiste üblicherweise in relativ großen Abständen aufeinanderfolgen. Besonders praktisch ist der Einsatz der Erfindung bei Fahrzeugen einer einheitlichen Fahrzeugflotte, da hier üblicherweise ohnehin Kommunikationsverbindungen zwischen den einzelnen Fahrzeugen oder zwischen jedem Fahrzeug und einer gemeinsamen Kommunikationszentrale bestehen. Aufgrund der Verknüpfung des Abtastens einer rückwärtigen Fahrzeugumgebung einerseits sowie einer Kommunikation zwischen den Fahrzeugen einer Fahrzeugflotte andererseits wird also eine zuverlässige Überwachung des Fahrwegs erreicht, ohne hierfür übermäßig aufwändige Sensoren oder andere Vorrichtungen vorsehen zu müssen.

Vorzugsweise wird ausschließlich ein Nahbereich hinter dem Kraftfahrzeug abgetastet, also beispielsweise ein Gebiet, das sich typischerweise 20 bis 30 m vom Fahrzeugheck aus nach hinten erstreckt. Innerhalb eines derartigen Entfernungsbereichs arbeiten viele bekannte Laserscanner ausreichend genau und zuverlässig. Ein von dem Fahrzeug herabgefallener Gegenstand kann somit schnell und sicher detektiert werden.

Das Signal kann an eine Empfangeinheit übermittelt werden, die einem weiteren Kraftfahrzeug zugeordnet, insbesondere an einem weiteren Kraftfahrzeug angeordnet, ist. Beispielsweise kann ein vorausfahrendes Fahrzeug ein Herabfallen eines Gegenstands direkt an ein nachfolgendes Fahrzeug melden. Bei dem nachfolgenden Fahrzeug können dann vor Erreichen des Gegenstands geeignete Maßnahmen eingeleitet werden.

Da die genaue Abfolge der einzelnen Fahrzeuge einer Fahrzeugflotte normalerweise unbekannt ist, kann das Signal insbesondere an mehrere Empfangseinheiten übermittelt werden, die jeweiligen Kraftfahrzeugen einer Fahrzeugflotte zugeordnet sind. Beispielsweise kann das Signal grundsätzlich an jedes Fahrzeug einer bestimmten Fahrzeugflotte übermittelt werden, sodass alle auf dem Fahrweg zugelassenen Fahrzeuge gewarnt sind. Von dem verlierenden Fahrzeug wird sozusagen ein Rundruf abgesetzt, der dafür sorgt, dass die Fahrer aller von dem Hindernis potentiell betroffenen Fahrzeuge bzw. Steuereinrichtungen aller betroffenen autonomen Fahrzeuge informiert sind.

Gemäß einer alternativen Ausführungsform kann das Signal auch an eine Empfangseinheit übermittelt werden, die einer stationären Kommunikationszentrale zugeordnet ist. Eine derartige Kommunikationszentrale ist bei vielen Fahrzeugflotten im Über- oder Untertagebau ohnehin vorhanden und kann somit günstigerweise auch zur Überwachung des Fahrwegs eingesetzt werden.

Bevorzugt wird das Signal von der stationären Kommunikationszentrale an mehrere Empfangseinheiten weitergeleitet, die jeweiligen Kraftfahrzeugen einer Fahrzeugflotte zugeordnet sind. Die Kommunikationszentrale kann bei einem Empfang eines entsprechenden Signals entweder alle weiteren Fahrzeuge der Flotte benachrichtigen oder anhand geeigneter Auswahlkriterien einzelne betroffene Fahrzeuge bestimmen, die dann entsprechend gewarnt werden.

Alternativ oder zusätzlich kann - entweder von dem den Gegenstand detektierenden Fahrzeug oder der stationären Kommunikationszentrale - eine Maßnahme zur Beseitigung des detektierten Gegenstandes eingeleitet werden, insbesondere ein Reinigungstrupp informiert werden, dem auch gleich der genaue Ort des zu beseitigenden Gegenstandes mitgeteilt werden kann.

Gemäß einer Ausführungsform wird aufgrund der Übermittlung des Signals bei einem dem Kraftfahrzeug auf dem Fahrweg nachfolgenden weiteren Kraftfahrzeug eine Sicherheitseinrichtung aktiviert und insbesondere ein automatisches Ausweich- oder Bremsmanöver eingeleitet. Bei der Sicherheitseinrichtung kann es sich im einfachsten Fall um eine optische und/oder akustische Warneinrichtung handeln, die dem Fahrer des jeweiligen Fahrzeugs anzeigt, dass sich ein herabgefallener Gegenstand auf dem Fahrweg befindet. Gemäß einer Weiterbildung können dem Fahrer auch weitergehende Informationen, beispielsweise über den Ort oder die Größe des Gegenstands, angezeigt werden. Durch das Einleiten eines automatischen Bremsmanövers kann die Zuverlässigkeit und die Sicherheit des Fahrbetriebs auf dem Fahrweg bedeutend erhöht werden, da auch dann eine Kollision vermieden wird, wenn der Fahrer auf die Warnung nicht rechtzeitig reagiert. Das Verfahren kann aber auch bei einer Flotte von autonomen, fahrerlosen Fahrzeugen angewandt werden, wobei ein empfangenes Signal direkt, d.h. ohne Umweg über eine Anzeige, die automatische Sicherheitsmaßnahme auslöst. Somit kann ein bedeutender Nachteil von fahrerlosen Transportfahrzeugen, nämlich die Gefahr einer Beschädigung durch auf der Transportpiste liegende Gegenstände, beseitigt werden. Durch ein Überwachungsverfahren dieser Art kann ein reibungsloser autonomer Fahrbetrieb in rauhen Bergbauumgebungen überhaupt erst ermöglicht werden.

Gemäß einer Weiterbildung der Erfindung wird die Position eines detektierten Gegenstands innerhalb des rückwärtigen Umgebungsbereichs bestimmt und an die Empfangseinheit übermittelt. Eine derartige Positionserfassung ist beispielsweise mittels eines Laserscanners problemlos möglich. Sie kann dazu dienen, die auszulösenden Sicherheitsmaßnahmen entsprechend abzustimmen. So kann es beispielsweise ausreichen, bei einem auf einer relativ breiten Piste liegenden Gegenstand lediglich ein Ausweichmanöver einzuleiten, während bei einem Gegenstand auf einem relativ schmalen Fahrweg ein Bremsmanöver notwendig ist. Gleichermaßen kann dem Fahrer eines nachfolgenden Fahrzeugs die Position des Gegenstands angezeigt werden, sodass er den Ausweichvorgang optimal vorbereiten kann.

Alternativ oder zusätzlich kann die Position des Kraftfahrzeugs auf dem Fahrweg zum Zeitpunkt des Detektierens eines Gegenstands, insbesondere mittels eines GPS-Systems, bestimmt werden. Dadurch ist nicht nur eine Lokalisierung eines herabgefallenen Gegenstands relativ zu dem verlierenden Fahrzeug möglich, sondern auch eine Bestimmung der globalen Koordinaten des Gegenstands auf der Transportpiste. Das Überwachungsverfahren wird dadurch weiter optimiert, da beispielsweise die Signalübermittlung an Fahrzeuge, die sich vor dem Gegenstand befinden, unterbleiben kann.

Ferner können die äußeren Abmessungen eines detektierten Gegenstands erfasst werden. Die erfasste Größe oder Form eines herabgefallenen Gegenstands kann zur weiteren Anpassung der auf das Signal hin auszulösenden Maßnahmen herangezogen werden. Beispielsweise könnten kleinere Steine grundsätzlich unberücksichtigt bleiben. Umgekehrt kann es ab einer bestimmten Gegenstandsgröße notwendig sein, einen Servicetrupp für eine Beseitigung des Hindernisses zu alarmieren.

Die der Erfindung zugrundeliegende Aufgabe wird ferner durch eine Vorrichtung zum Überwachen eines Fahrwegs für Kraftfahrzeuge einer Fahrzeugflotte mit den Merkmalen des Anspruchs 11 gelöst. Erfindungsgemäß umfasst die Vorrichtung mehrere optische Erfassungseinrichtungen, insbesondere Laserscanner, die jeweiligen Kraftfahrzeugen der Fahrzeugflotte zugeordnet sind und die in der Lage sind, einen rückwärtigen Umgebungsbereich des jeweiligen Kraftfahrzeugs abzutasten und auf dem Fahrweg befindliche Gegenstände in dem rückwärtigen Umgebungsbereich zu detektieren. Ferner sind mehrere Sendeeinheiten vorgesehen, die mit den jeweiligen Erfassungseinrichtungen in Verbindung stehen und die dazu ausgebildet sind, ein Signal auszusenden, sobald ein Gegenstand in dem rückwärtigen Umgebungsbereich detektiert wird. Ferner sind mehrere Empfangseinheiten vorgesehen, die den jeweiligen Kraftfahrzeugen der Fahrzeugflotte zugeordnet sind und die dazu ausgebildet sind, ein von einer der Sendeeinheiten gesendetes Signal zu empfangen und aufgrund eines empfangenen Signals eine Sicherheitseinrichtung des jeweiligen Kraftfahrzeugs zu aktivieren. Durch die Anordnung aus optischen Erfassungseinrichtungen, Sendeeinheiten und Empfangseinheiten wird eine effektive und zuverlässige Überwachung eines Fahrwegs ermöglicht. Es werden dabei die Besonderheiten eines festen, gemeinsam verwalteten Fahrzeugbestandes ausgenutzt.

Insbesondere kann jede der optischen Erfassungseinrichtungen derart an dem jeweiligen Kraftfahrzeug angebracht sein, dass der rückwärtige Umgebungsbereich auf einen Nahbereich hinter dem Kraftfahrzeug begrenzt ist. Der Nahbereich hinter einem Kraftfahrzeug kann mittels bekannter Sensoren wie Laserscanner schnell und zuverlässig abgetastet werden.

Vorzugsweise ist der Fahrzeugflotte eine stationäre Kommunikationszentrale zugeordnet, welche mit jeder der Sendeeinheiten und/oder der Empfangseinheiten der Kraftfahrzeuge in Verbindung steht. Eine derartige Kommunikationszentrale steht in vielen Bergbauumgebungen ohnehin zur Verfügung, sodass zur Einrichtung eines Kommunikationsnetzes keine aufwändigen Zusatzvorrichtungen bereitzustellen sind.

Gemäß einer Ausführungsform sind die Kraftfahrzeuge der Fahrzeugflotte zu einem autonomen Fahrbetrieb auf dem Fahrweg ausgebildet. Die Sicherheitseinrichtung kann ferner dazu ausgebildet sein, aufgrund eines empfangenen Signals bei dem jeweiligen Kraftfahrzeug ein automatisches Ausweich- oder Bremsmanöver auszulösen. Es ist somit möglich, auch bei einer fahrerlosen Fahrzeugflotte, bei der bislang kein zufriedenstellendes Ausweichen möglich ist, einen hohen Sicherheitsstandard zu gewährleisten und so einen Einsatz in rauhen Umgebungen überhaupt erst zu ermöglichen.

Bevorzugt ist die optische Erfassungseinrichtung des Fahrzeugs dazu ausgebildet, zusätzliche Funktionen auszuführen, d.h. die Detektion verlorener Gegenstände ist nicht die einzige Applikation, die mit der Erfassungseinrichtung durchgeführt wird. Als eine zusätzliche Applikation kann z.B. eine Rückfahrwarnfunktion implementiert sein.

Die Erfindung wird im Folgenden beispielhaft unter Bezugnahme auf die Zeichnung beschrieben.

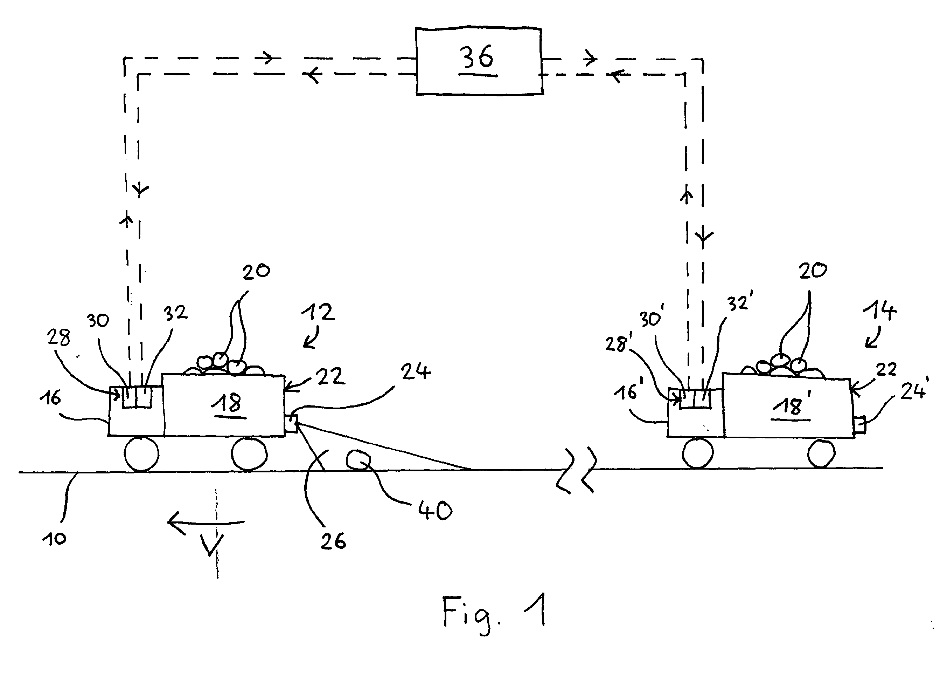

- Fig. 1: zeigt eine schematische Darstellung einer erfindungsgemäßen Vorrichtung zum Überwachen eines Fahrwegs für Kraftfahrzeuge.

Bei dem Fahrweg 10 handelt es sich um eine Transportpiste in einer Bergbauumgebung, auf der Transportfahrzeuge in einer Vorwärtsrichtung V unterwegs sind. Beispielhaft sind ein erstes, vorausfahrendes Fahrzeug 12 sowie ein zweites, dem ersten Fahrzeug 12 nachfolgendes Fahrzeug 14 dargestellt. Die Fahrzeuge 12, 14 gehören zu einer gemeinsamen Fahrzeugflotte und weisen ein jeweiliges Führerhaus 16, 16' sowie eine jeweilige offene Kippmulde 18, 18' zum Transport von Steinen 20 auf. An der Rückseite 22 der Fahrzeuge 12, 14 sind jeweilige Laserscanner 24, 24' angebracht, welche in der Lage sind, ein Abstandsbild zu erfassen.

Laserscanner zur Erfassung von Abstandsbildern sind grundsätzlich bekannt. Vorzugsweise werden Systeme verwendet, die bei einer Abtastung einen Erfassungsbereich mit mindestens einem gepulsten Strahlungsbündel abtasten, das einen vorgegebenen Winkelbereich, vorzugsweise mit einer Schwenkbewegung, überstreicht und von einem Punkt bzw. Bereich eines Gegenstands, meist diffus, zurückgeworfene Strahlungspulse des Strahlungsbündels detektieren. Dabei wird zur Entfernungsmessung die Laufzeit der ausgesandten und zurückgeworfenen Strahlungspulse erfasst. Die so erfassten Abtastdaten für einen Bildpunkt können dann als Koordinaten den Winkel, bei dem der Reflex erfasst wurde, und die aus der Laufzeit der Strahlungspulse bestimmte Entfernung des Gegenstandspunktes von dem Laserscanner enthalten. Bei der Strahlung kann es sich insbesondere um sichtbares oder Infrarotlicht handeln. Alternativ zur Laufzeitmessung des Lichts kann auch eine Phasendifferenzmessung herangezogen werden. Der Sensor erfasst die Abstandsbilder in zeitlicher, vorzugsweise zeitlich äquidistanter Folge, wobei die Bildpunkte innerhalb eines einzelnen Bildes nicht unbedingt nacheinander erfasst zu werden brauchen. Das Überstreichen des vorgegebenen Winkelbereichs kann auch in mehreren Ebenen erfolgen, um so bei der Erfassung eine zweite Dimension abzudecken.

Wie aus der Figur hervorgeht, ist der Laserscanner 24 derart an dem ersten Fahrzeug 12 montiert, dass er einen rückwärtigen Umgebungsbereich 26 des ersten Fahrzeugs 12 abtastet. Das abgetastete Volumen ist also auf einen bodennahen Bereich unmittelbar hinter dem Fahrzeug 12 beschränkt. Die örtliche Auflösung des Laserscanners 24 ist dabei auf die Anwendungsvorgaben angepasst. Das Fahrzeug 12 umfasst ferner eine Kommunikationseinrichtung 28 mit einer Sendeeinheit 30 sowie einer Empfangeinheit 32. Dem zweiten Fahrzeug 14 ist gleichermaßen eine Kommunikationseinrichtung 28' mit einer Sendeeinheit 30' und einer Empfangeinheit 32' zugeordnet. Die Kommunikationseinrichtungen 28, 28' können beispielsweise herkömmliche Funkgeräte sein, welche in den Führerhäusern 16, 16' der Kraftfahrzeuge 12, 14 angebracht sind. Abseits des Fahrwegs 10, beispielsweise in einem Verwaltungsgebäude des zugehörigen Bergbauunternehmens, befindet sich eine stationäre Kommunikationszentrale 36 mit einer nicht dargestellten Sendeeinheit und Empfangseinheit. Zwischen der Kommunikationszentrale 36 und den Kommunikationseinrichtungen 28, 28' bestehen jeweilige bidirektionale Kommunikationsverbindungen.

Sobald das vorausfahrende Fahrzeug 12 während einer Fahrt auf dem Fahrweg 10 in Vorwärtsrichtung V einen Stein 40 verliert und dieser hinter dem Fahrzeug 12 auf den Fahrweg 10 fällt, erfolgt eine Erfassung durch den Laserscanner 24. Da jeder herabgefallene Stein 40 in dem abgetasteten rückwärtigen Umgebungsbereich 26 landet, wird das Verlieren eines Steins 40 stets durch den Laserscanner 24 erkannt. Die Kommunikationseinrichtung 28 des verlierenden Fahrzeugs 12 übermittelt daraufhin ein Signal an die Kommunikationszentrale 36. Die Kommunikationszentrale 36 sendet daraufhin ein Signal an die Kommunikationseinrichtung 28' des nachfolgenden Fahrzeugs 14. Bei dem nachfolgenden Fahrzeug 14 wird aufgrund des empfangenen Signals eine Warnanzeige aktiviert, die dem Fahrer das Vorhandensein des verlorenen Steins 40 anzeigt. Der Fahrer des nachfolgenden Fahrzeugs 14 kann dementsprechend die Geschwindigkeit verringern oder sich auf ein Ausweichmanöver vorbereiten. Alternativ kann auch ein Steuerungsmodul auf dem nachfolgenden Fahrzeug 14 installiert sein, durch welches nach dem Empfang eines Signals ein vollautomatischer Ausweichvorgang ausgelöst wird.

Zur einfacheren Erläuterung des der Erfindung zugrundeliegenden Prinzips sind in Fig. 1 lediglich zwei Fahrzeuge 12, 14 sowie ein rückwärtiger Umgebungsbereich 26 dargestellt. Üblicherweise umfasst eine Fahrzeugflotte im Bergbau jedoch zahlreiche Transportfahrzeuge, die alle untereinander sowie mit einer oder mehreren stationären Kommunikationszentralen in Funkverbindung stehen. Zweckmäßigerweise ist hier jedem Fahrzeug der Fahrzeugflotte ein Laserscanner sowie eine Kommunikationseinrichtung zugeordnet, d.h. die Ausbildung der Einzelfahrzeuge der Fahrzeugflotte hinsichtlich der Überwachungsbauelemente ist völlig symmetrisch. Da auf dem Fahrweg ausschließlich Fahrzeuge der Flotte unterwegs sind, wird somit jeder verlorene Gegenstand detektiert. Die Laserscanner können relativ einfach ausgebildet sein. Insbesondere ist es nicht unbedingt notwendig, eine komplexe Objekterkennung oder -verfolgung vorzusehen, da es sich bei einem detektierten Objekt hinter einem sich in Vorwärtsrichtung V bewegenden Fahrzeug nur um einen verlorenen Gegenstand handeln kann.

Durch die Beschränkung der Sensorabtastung auf den rückwärtigen Nahbereich eines jeweiligen Fahrzeugs einer Flotte ist die Erkennung von herabgefallenen Gegenständen mit hoher Zuverlässigkeit möglich. Der Fahrer eines nachfolgenden Fahrzeugs hat ausreichend Zeit, sich auf ein Bremsen oder Ausweichen vorzubereiten. Die Information über ein auf der Transportpiste befindliches Hindernis steht also frühzeitig zur Verfügung, sodass alle nachfolgenden Fahrzeuge ausreichend Zeit haben, auf das Hindernis angemessen zu reagieren. Somit wird eine Kollision der Fahrzeuge mit heruntergefallenen Steinen bzw. ein Überfahren dieser Steine vermieden, was insbesondere hinsichtlich der Lebensdauer der Reifen zu bedeutenden Vorteilen führt. Bislang führte der häufige Austausch der Reifen aufgrund einer Beschädigung durch verlorene Steine insbesondere bei größeren Fahrzeugen zu beträchtlichen Kosten.

Besonders vorteilhaft ist eine effiziente Überwachung des Fahrwegs bei einem autonomen Fahrbetrieb, wie er in vielen Bereichen des Bergbaus angestrebt wird. Bei einem derartigen Fahrbetrieb ist eine Absicherung gegenüber verlorenen Gegenständen von entscheidender Bedeutung, da die Erkennung durch einen Fahrer entfällt.

### Bezugszeichenliste

- 10: Fahrweg
- 12: erstes Fahrzeug
- 14: zweites Fahrzeug
- 16, 16': Führerhaus
- 18, 18': Kippmulde
- 20: transportierter Stein
- 22: Rückseite
- 24, 24': Laserscanner
- 26: rückwärtiger Umgebungsbereich
- 28, 28': Kommunikationseinrichtung
- 30, 30': Sendeeinheit
- 32, 32': Empfangseinheit
- 36: Kommunikationszentrale
- 40: herabgefallener Stein

- V: Vorwärtsrichtung

## Patentansprüche

1. Verfahren zum Überwachen eines Fahrwegs (10) für Kraftfahrzeuge, insbesondere einer Transportpiste in einer Bergbauumgebung, bei dem:
ein rückwärtiger Umgebungsbereich (26) eines Kraftfahrzeugs (12) mittels einer optischen Erfassungseinrichtung (24), insbesondere eines Laserscanners, während einer Vorwärtsfahrt des Kraftfahrzeugs (12) auf dem Fahrweg (10) abgetastet wird;
auf dem Fahrweg (10) befindliche, insbesondere von dem Fahrzeug (12) verlorene, Gegenstände (40) in dem rückwärtigen Umgebungsbereich (26) detektiert werden; und
ein Signal an wenigstens eine von dem Kraftfahrzeug (12) entfernte Empfangseinheit (32') übermittelt wird, sobald ein Gegenstand (40) in dem rückwärtigen Umgebungsbereich (26) detektiert wird.

2. Verfahren nach Anspruch 1,
**dadurchgekennzeichnet,dass**
ausschließlich ein Nahbereich hinter dem Kraftfahrzeug (12) abgetastet wird.

3. Verfahren nach Anspruch 1 oder 2,
**dadurchgekennzeichnet,dass**
das Signal an eine Empfangseinheit (32') übermittelt wird, die einem weiteren Kraftfahrzeug (14) zugeordnet, insbesondere an einem weiteren Kraftfahrzeug (14) angeordnet, ist.

4. Verfahren nach zumindest einem der vorstehenden Ansprüche,
**dadurchgekennzeichnet,dass**
das Signal an mehrere Empfangseinheiten (32') übermittelt wird, die jeweiligen Kraftfahrzeugen (14) einer Fahrzeugflotte zugeordnet sind.

5. Verfahren nach zumindest einem der vorstehenden Ansprüche,
**dadurchgekennzeichnet,dass**
das Signal an eine Empfangseinheit übermittelt wird, die einer stationären Kommunikationszentrale (36) zugeordnet ist.

6. Verfahren nach Anspruch 5,
**dadurchgekennzeichnet,dass**
das Signal von der stationären Kommunikationszentrale (36) an mehrere Empfangseinheiten (32') weitergeleitet wird, die jeweiligen Kraftfahrzeugen (14) einer Fahrzeugflotte zugeordnet sind.

7. Verfahren nach zumindest einem der vorstehenden Ansprüche,
**dadurch gekennzeichnet, dass**
aufgrund der Übermittlung des Signals bei einem dem Kraftfahrzeug (12) auf dem Fahrweg (10) nachfolgenden weiteren Kraftfahrzeug (14) eine Sicherheitseinrichtung aktiviert und insbesondere ein automatisches Ausweich- oder Bremsmanöver eingeleitet wird.

8. Verfahren nach zumindest einem der vorstehenden Ansprüche,
**dadurch gekennzeichnet, dass**
die Position eines detektierten Gegenstands (40) innerhalb des rückwärtigen Umgebungsbereichs (26) bestimmt und an die Empfangseinheit (32') übermittelt wird.

9. Verfahren nach zumindest einem der vorstehenden Ansprüche,
**dadurch gekennzeichnet, dass**
die Position des Kraftfahrzeugs (12) auf dem Fahrweg (10) zum Zeitpunkt des Detektierens eines Gegenstands (40), insbesondere mittels eines GPS-Systems, bestimmt wird.

10. Verfahren nach zumindest einem der vorstehenden Ansprüche,
**dadurch gekennzeichnet, dass**
die äußeren Abmessungen eines detektierten Gegenstands (40) erfasst werden.

11. Vorrichtung zum Überwachen eines Fahrwegs (10) für Kraftfahrzeuge einer Fahrzeugflotte, insbesondere einer Transportpiste in einer Bergbauumgebung,
**gekennzeichnet durch**
mehrere optische Erfassungseinrichtungen (24, 24'), insbesondere Laserscanner, die jeweiligen Kraftfahrzeugen (12, 14) der Fahrzeugflotte zugeordnet sind und die in der Lage sind, einen rückwärtigen Umgebungsbereich (26) des jeweiligen Kraftfahrzeugs (12, 14) abzutasten und auf dem Fahrweg (10) befindliche Gegenstände (40) in dem rückwärtigen Umgebungsbereich (26) zu detektieren;
mehrere Sendeeinheiten (30, 30'), die mit den jeweiligen Erfassungseinrichtungen (24, 24') in Verbindung stehen und die dazu ausgebildet sind, ein Signal auszusenden, sobald ein Gegenstand (40) in dem rückwärtigen Umgebungsbereich (26) detektiert wird; und
mehrere Empfangseinheiten (32, 32'), die den jeweiligen Kraftfahrzeugen (12, 14) der Fahrzeugflotte zugeordnet sind und die dazu ausgebildet sind, ein von einer der Sendeeinheiten (30, 30') gesendetes Signal zu empfangen und aufgrund eines empfangenen Signals eine Sicherheitseinrichtung des jeweiligen Kraftfahrzeugs (12, 14) zu aktivieren.

12. Vorrichtung nach Anspruch 11,
**dadurch gekennzeichnet, dass**
jede der optischen Erfassungseinrichtungen (24, 24') derart an dem jeweiligen Kraftfahrzeug (12, 14) angebracht ist, dass der rückwärtige Umgebungsbereich (26) auf einen Nahbereich hinter dem Kraftfahrzeug (12, 14) begrenzt ist.

13. Vorrichtung nach Anspruch 11 oder 12,
**dadurch gekennzeichnet, dass**
der Fahrzeugflotte eine stationäre Kommunikationszentrale (36) zugeordnet ist, welche mit jeder der Sendeeinheiten (30, 30') und/oder der Empfangseinheiten (32, 32') der Kraftfahrzeuge (12, 14) in Verbindung steht.

14. Vorrichtung nach zumindest einem der Ansprüche 11 bis 13,
**dadurch gekennzeichnet, dass**
die Kraftfahrzeuge (12, 14) der Fahrzeugflotte zu einem autonomen Fahrbetrieb auf dem Fahrweg (10) ausgebildet sind.

15. Vorrichtung nach zumindest einem der Ansprüche 11 bis 14,
**dadurch gekennzeichnet, dass**
die Sicherheitseinrichtung dazu ausgebildet ist, aufgrund eines empfangenen Signals bei dem jeweiligen Kraftfahrzeug (12, 14) ein automatisches Ausweich- oder Bremsmanöver auszulösen.
